# EUROPEAN PATENT SPECIFICATION

(11) **EP 4 568 798 B1**
(45) Date of publication and mention of the grant of the patent: **30.09.2026**
(21) Application number: 23765315.9
(22) Date of filing: 11.08.2023
(51) Int. Cl.: B09C 1/00, B09C 1/08, B09C 1/10, C02F 1/40, C02F 1/00, C02F 1/72, C02F 9/00, B01D 21/00, C02F 103/06, C02F 1/28, C02F 1/52, C02F 1/56, C02F 1/66, C02F 1/76, C02F 3/34, C02F 1/74

(54) **PROCESS FOR SOIL AND GROUNDWATER DECONTAMINATION IN AN AREA TO BE DECONTAMINATED FROM ORGANIC AND INORGANIC CONTAMINANTS AND PLANT FOR CARRYING OUT SUCH A PROCESS**
VERFAHREN ZUR BODEN- UND GRUNDWASSER-DEKONTAMINATION IN EINEM ZU DEKONTAMINIERENDEN BEREICH VON ORGANISCHEN UND ANORGANISCHEN VERUNREINIGUNGEN UND ANLAGE ZUR DURCHFÜHRUNG EINES SOLCHEN VERFAHRENS
PROCÉDÉ DE DÉCONTAMINATION DU SOL ET DE L'EAU SOUTERRAINE DANS UNE ZONE À DÉCONTAMINER À PARTIR DE CONTAMINANTS ORGANIQUES ET INORGANIQUES ET INSTALLATION POUR LA MISE EN OEUVRE D'UN TEL PROCÉDÉ

(30) Priority: 11.08.2022 IT 202200017199
(43) Date of publication of application: 18.06.2025
(73) Proprietor: Teseco Bonifiche S.r.l., 56121 Pisa (IT); Consiglio Nazionale Delle Ricerche, 00185 Roma (IT); Studio Podgornik - Societa' a Responsabilita' Limitata, 34121 Trieste (IT); DND Biotech S.r.l., 56121 Pisa (IT)
(72) Inventor: MASCIANDARO, Grazia, 56124 PISA (IT); DONI, Serena, 56020 Santa Maria a Monte (PI) (IT); GENTINI, Alessandro, 56043 Fauglia (PI) (IT); GARCIA ALIA, Carlos, 30100 Murcia Murcia (ES); PARISI, Angelica, 56124 PISA (IT); DI GREGORIO, Simona, 57031 Capoliveri (IT); ALZETTA, Sara, 34134 TRIESTE (IT)
(74) Representative: ABM Agenzia Brevetti & Marchi
(86) International application number: PCT/IB2023/058128
(87) International publication number: WO 2024/033885

(56) References cited:
- KR-B1- 101 119 394
- US-A- 3 706 384
- US-A- 6 158 924

## Description

### Field of the invention

The present invention relates to a plant for the treatment of subsoil and aquifer which is able to reduce, up to completely eliminate, organic and/or inorganic substances contaminating the same.

The invention relates, furthermore, to a process for the decontamination of subsoil and aquifer.

### Description of the prior art

As known, in the subsoil and groundwater are normally present contaminants of anthropic or natural origin, which, accumulating over time, can exceed the limits beyond which they are dangerous for the health of human beings and for the health of the environment.

In particular, the soils are highly contaminated at the industrial sites, even though abandoned from a long time, in the waste disposal areas, but also in areas where particular intensive agricultural practices are carried out.

The main contaminants detected at the industrial sites are normally lubricant oils, fuels, chloride solvents, aromatic compounds, dioxins, Polychlorinated biphenyls (PCBs), but also heavy metals, ionic compounds, etc.

The agricultural activities can contribute to increase the subsoil and groundwater pollution due to the use of pesticides, fungicides, parasiticides, phosphates, nitrates etc.

The quality of subsoil can also be compromised due to the storage of chemical products, because some quantity of these substances can move in the soil and trigger chemicalphysical processes which produce toxic, or cancerogenic substances.

Therefore, over time, processes and plants have been studied for removing the aforementioned contaminant substances from the subsoil and from the groundwater.

However, the processes and the plants that have been designed are not very effective due to the great depth at which the operations have to be carried out, in addition to the high volumes to be treated, which make the operations necessary to carry out the decontamination of the target area highly expensive and technically complex.

The known processes are specifically designed for the decontamination of saturated or unsaturated zones of the soil, or of the aquifer. Technologies are not known that are effective contemporaneously on all the aforementioned environmental compartments.

Another drawback is that the known processes are generally selective on the contamination target and, therefore, specific, alternatively, for removing organic or inorganic contaminants.

Unto this day, for example, technologies are known which provide to inject in the subsoil determined chemical or biological products by traditional piezometers. The piezometers, at the saturated zone of the soil, are provided with windows through which the reagent products are introduced in the aquifer.

These technologies are not able to decontaminate the unsaturated zone of the soil.

Othe technologies use system for insufflating air or oxygen for stimulating biological degrative processes in the soil at the saturated and unsaturated zones.

These technologies are not effective on the inorganic contamination and are used for the treatment of soils characterized by low concentrations of organic contaminants.

In the prior art systems are also known for in situ fluxing of the soil, that can be used on the unsaturated zone of the soil, that, however, are exclusively based on the leaching capacity of the fluxing fluid, without activating biodegradative processes of the organic decontamination.

Other prior art solutions are described in KR101119394, US6158924 and US3706384.

In particular, the document KR101119394 describes a movable system for purifying the leachate generated by a buried place of livestock carcass. The decontamination system is mounted on a vehicle and provides a pumping device for pumping the leachate from a well to subject the same to a Fenton treatment and to a filtering process. However, the solution described in KR101119394 is not able to satisfactory reduce organic and inorganic contaminants in particular of large areas.

Another drawback of the solution described in KR101119394 is that the process is not versatile, that means that cannot be modified depending on the type of soil and/or groundwater to be decontaminated. Therefore, the effectiveness of the described treatment is limited only to determined types of contaminants.

### Summary of the invention

The invention relates to a plant in accordance with claim 1 and to a process in accordance with claim 15.

Dependent claims refer to preferred embodiments of the invention.

It is, therefore, an object of the present invention to provide a plant for *in situ* decontamination of soil and groundwater of a predetermined area to be decontaminated which allows to remove from the treated material both organic contaminants and inorganic contaminants by biological and chemical mechanisms.

It is also an object of the present invention to provide a plant for *in situ* decontamination of soil and groundwater that is highly versatile and that can be modified on the basis of the type of organic and/or inorganic contaminants which are present in the soil and groundwater to be decontaminated.

It is, furthermore, an object of the present invention to provide a process for *in situ* decontamination of soil and groundwater having the same advantages.

These and other objects are achieved by a plant, according to the invention, for *in situ* decontamination of soil and/or groundwater in a predetermined area to be decontaminated from organic and inorganic contaminants, wherein said soil and/or said groundwater to be decontaminated have been preliminary subjected to a characterization step for designing a conceptual multidimensional model, whose main characteristic is that it comprises:
- an extraction section configured to extract a predetermined flow-rate of said groundwater to be decontaminated;
- a pre-treatment section hydraulically connected a said extraction section, said pre-treatment section comprising at least a primary sedimentation device configured to separate determined floating substances and sludge from said groundwater obtaining a pre-treated aqueous solution;
- a physical-chemical treatment section hydraulically connected to said pre-treatment section for feeding in said physical-chemical treatment section a predetermined flow-rate of said pre-treated aqueous solution, said physical-chemical treatment section comprising:
   - a predetermined number of reaction tanks inside of which said predetermined flow-rate of said pre-treated solution is arranged to be fed to subject said pre-treated aqueous solution to at least a reaction by adding first predetermined reagents adapted to cause the precipitation of determined contaminants which are present in said pre-treated aqueous solution;
   - at least a secondary sedimentation device hydraulically connected to at least a reaction tank of said predetermined number of reaction tanks and configured to physically separate said precipitated contaminants from an aqueous solution;
   - at least a filtering device hydraulically connected to said secondary sedimentation device, said or each filtering device being configured to filter said aqueous solution, obtaining a filtered aqueous solution;
- an enrichment section configured to add second predetermined chemical reagents and at least one predetermined enrichment biological solution to said filtered aqueous solution obtaining an enriched aqueous solution, said second predetermined chemical reagents and said or each enrichment biological solution being selected according to said conceptual multidimensional model;
- an injection section configured to inject at a predetermined depth in said soil of said predetermined area to be decontaminated, a predetermined injection flow-rate of said enriched aqueous solution to obtain a saturation of the unsaturated zone of said soil of said predetermined area to be decontaminated and to stimulate a hydraulic circulation both at the saturated zone and at the unsaturated zone of the soil, in such a way to promote a biostimulation, a bioaugmentation and a leaching of said inorganic and organic contaminants.

In this way, the typical characteristics of the soil identified in the preliminary characterization step allows to design a conceptual multidimensional model for calibrating the enrichment step of the filtered aqueous solution.

In particular, in the enriched aqueous solution microorganisms can be added that are selected on the basis of the results of a metagenomic analysis of the soil and/or groundwater carried out in the preliminary characterization step.

Other technical characteristics of the invention and related embodiments are defined in the dependent claims.

In particular, at the enrichment section the addition of a predetermined quantity of oxygen or air to the filtered aqueous solution, can be, furthermore, provided. More in particular, the aforementioned predetermined quantity of oxygen can be set according to the conceptual multidimensional model.

In particular, during the aforementioned preliminary characterization step a plurality of physical-chemical and/or nutrient parameters is measured. More in particular, the aforementioned plurality of physical-chemical and/or nutrient parameters can be chosen among: soil texture, soil structure, apparent density, electrical conductivity, pH, Redox potential, humidity content, mineralogical and geochemical composition, cation exchange capacity, plugging capacity, organic material content, nutrients content, for example organic Carbon, Total Carbon, Total Nitrogen, Phosphorus and available Potassium, or a combination thereof.

In particular, during the aforementioned preliminary characterization step, the contamination factors are analysed. More in particular, the aforementioned analysis of the aforementioned contamination factors can be chosen among: analysis of the concentration in soil and in groundwater of heavy metals and metalloids, polycyclic aromatic hydrocarbon, petroleum hydrocarbons, polychlorobiphenyls, dioxins and furans, pesticides, sequential extraction procedure (SEP), metals and metalloids, in particular according to the BCR fractionation method 1997, Srithongkul 2020, Wenzel 2001.

In particular, during the aforementioned preliminary characterization step an analysis is carried out of the autochthonous microbial community of the contaminated soils. More in particular, the aforementioned analysis of the aforementioned microbial community can be carried out by extracting the total genomic DNA of the environmental matrix by metabarcoding and predictive functional metagenomic.

In particular, during the aforementioned preliminary characterization step the analysis of the toxicity of the environmental matrix is carried out. More in particular, the aforementioned analysis of the toxicity of the environmental matrix can be carried out by: micronucleus test ISO 29200:2020, acute toxicity test, eluate test WET, phytotoxicity test.

The data acquired with the aforementioned preliminary characterization step are introduced into a data-base and converted into a conceptual model of the site that can be represented in a multidimensional space, the evolution of which is monitored during the treatment, thanks to the execution of successive characterization campaigns of the treated matrices, i.e. groundwater and soil.

In particular, the enrichment section comprises at least a bioreactor containing a predetermined biological solution. More in particular, the aforementioned biological solution comprises at least a species of microorganisms selected on the basis of the results of the aforementioned preliminary characterization step of the soil and/or groundwater.

In an embodiment of the invention, the aforementioned biological solution comprises at least a species of microorganisms selected among:
- Ascomycetes fungi, preferably of Fusarium Oxysporum sp genus;
- Bacteria of Proteobacteria species and/or Actinobacteria species;
- or a combination thereof.

Advantageously, the enrichment section can comprise at least one mechanical mixer configured to mix a predetermined quantity of air or oxygen with a predetermined flow of the filtered aqueous solution.

In particular, the or each mechanical mixer can be adapted to mix a predetermined quantity of micro-bubbles and/or nano-bubbles of air and/or of oxygen with the filtered aqueous solution. In this way, the quantity of oxygen dissolved in the filtered aqueous solution increases. This allows to promote, as anticipated above, chemical and aerobic biological processes in the subsoil and in the groundwater of the area to be decontaminated.

In addition, or alternatively, to the or each mechanical mixer, the enrichment section can comprise at least one storage tank containing at least a reagent adapted to be added to the filtered aqueous solution at the enrichment section, in particular to a predetermined flow-rate of this, to be, then, injected at the successive injection section.

More precisely, the or each storage tank contains at least one reagent chosen among:
- a solution of hydrogen peroxide at a concentration of between 30% and 40%, for example 35%;
- a solution of 60% sodium dithionite;
- a solution of ascorbic acid and ammonium oxalate;
- a solution of ethylenediaminetetraacetic acid, or EDTA, in particular at a concentration of 1%;
or a combination thereof.

In an embodiment of the invention, the aforementioned extraction section comprises at least one extraction well, preferably a slotted extraction well. Preferably, at least one pumping device is provided adapted to pump the aforementioned aqueous solution to be decontaminated and to form a flow to be decontaminated.

In particular, the aforementioned injection section can comprise at least an injection duct hydraulically connected to at least one pump for pumping the enriched aqueous solution into the or each injection duct.

In particular, the aforementioned pre-treatment section can provide a plurality of primary sedimentation devices arranged in series or in parallel to each other.

Advantageously, the aforementioned reaction tanks can comprise at least one reaction tank selected among:
- a tank containing sodium hydroxide, in particular a solution of sodium hydroxide at a concentration of between 25% and 35%, preferably 30%;
- a tank containing aluminium polychloride, or PAC, in particular at a concentration of between 15% and 20%, preferably 17%, or 18%;
- a tank containing sodium hydrosulphide, in particular at a concentration of between 5% and 15%, preferably al 10%;
- a tank containing at least a polyelectrolyte, in particular at a concentration of between 0.05% and 0.2%, preferably 0.1%;
- a tank containing hydrogen peroxide, in particular at a concentration of between 25% and 35%, preferably at a concentration of 30%;
- a tank containing sodium hypochlorite, in particular at a concentration of between 10% and 20%, preferably at a concentration of 14%.

Preferably, the flow-rate extracted at the extraction section is greater than the flow-rate of the injected aqueous solution at the injection section.

According to another aspect of the invention, a process for *in situ* decontamination of soil and/or groundwater in a predetermined area to be decontaminated from organic and inorganic contaminants comprises the steps of:
- chemical, physical and biological characterization of the soil and/or groundwater to be decontaminated;
- designing a conceptual multidimensional model of the area to be decontaminated on the basis of said chemical, physical and biological characterization;
- extracting a predetermined flow-rate of said groundwater from said area to be decontaminated;
- pre-treating said groundwater for removing floating substances and sludge obtaining a pre-treated aqueous solution;
- physical-chemical treatment of said pre-treated aqueous solution, said physical-chemical treatment comprising the steps of:
   - adding first predetermined chemical reagents to said pre-treated solution to cause the precipitation of determined contaminants which are present in said pre-treated solution;
   - sedimentation of an aqueous solution obtained by said adding step of said first predetermined chemical reagents to said pre-treated solution to cause a physical separation of said precipitated contaminants from an aqueous solution;
   - filtering said aqueous solution obtaining a filtered aqueous solution;
- enrichment of said filtered aqueous solution by adding second predetermined chemical reagents and at least a predetermined enrichment biological solution, to said filtered aqueous solution obtaining an enriched aqueous solution, said second predetermined chemical reagents and said, or each, predetermined enrichment biological solution being selected according to said conceptual multidimensional model;
- injecting, at a predetermined depth, in said soil of said predetermined area to be decontaminated, a predetermined flow-rate of said enriched aqueous solution to obtain a saturation of the unsaturated zone of said soil of said predetermined area to be decontaminated and to stimulate a hydraulic circulation at the saturated zone and at the unsaturated zone of soil, in such a way to promote a biostimulation, a bioaugmentation and a leaching of said organic and inorganic contaminants.

In particular, the enrichment step can provide, furthermore, a mixing of a predetermined quantity of oxygen, or air, to the filtered aqueous solution. More in particular, the aforementioned predetermined quantity, in particular the flow-rate, of oxygen, or air, mixed to the filtered aqueous solution can be set, or modulated, according to the conceptual multidimensional model.

In particular, a dehydration step can be, furthermore, provided of the sludge coming from the primary sedimentation and from the secondary sedimentation.

### Brief description of the drawings

The invention will now be shown with the following description of its exemplary embodiments, exemplifying but not limitative, with reference to the attached drawings in which:
- Fig. 1 shows a possible functional scheme of the plant, according to the invention, for the decontamination of soil and groundwater of a predetermined area to be decontaminated from organic and inorganic contaminants;
- Fig. 2 shows the conceptual scheme of the plant of figure 1 to highlight some technical characteristics;
- Fig. 3 shows a complete plant configuration provided by the invention of the plant of figure 1 for soil and groundwater decontamination of a predetermined area to be decontaminated from organic and inorganic contaminants;
- Fig. 4 diagrammatically shows a plan view of the plant of figure 3 to show some technical characteristics;
- Fig. 5 diagrammatically shows an elevational side view of an extraction well which can be used by the plant, according to the invention, for extracting soil and groundwater;
- Fig. 6 diagrammatically shows an elevational side view of an injection well which can be used by the plant, according to the invention, for injecting in the subsoil the water subjected to the process carried out by the decontamination plant, according to the invention;
- Fig. 7 diagrammatically shows an elevational side view of a possible embodiment of a detection probe for detecting the soil gases which can be used by the plant according to the invention;
- Fig. 8 diagrammatically shows an elevational side view of a possible embodiment of a groundwater monitoring well, which can be used by the plant according to the invention;
- Fig. 9 diagrammatically shows a possible sequence of steps of the process, according to the invention, for the decontamination of soil and groundwater from organic and inorganic contaminants.

### Detailed description of some exemplary embodiments of the invention

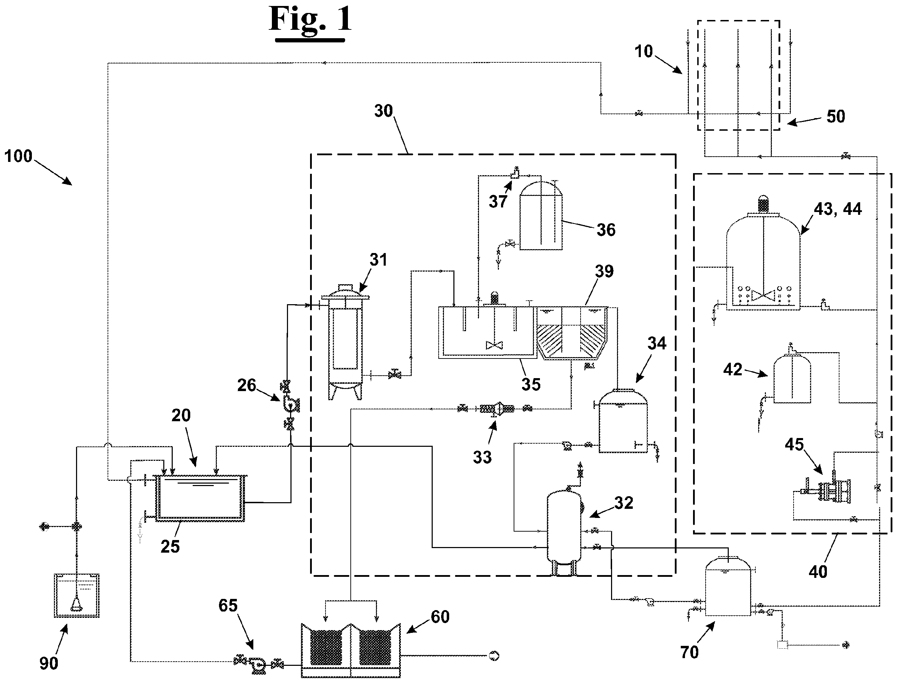

In figure 1 a plant 1, according to the invention, is diagrammatically shown for *in situ* decontamination of soil and/or groundwater of a predetermined area to be decontaminated simultaneously from contaminants of organic type, in particular Polycyclic Aromatic Hydrocarbon (PAH) and Total petroleum hydrocarbons (TPH), and of inorganic type, in particular iron, Manganese, Cadmium, Copper, Chrome, Magnesium, Nichel, Lead, Zinc and Arsenic.

In particular, according to what is provided by the invention, and described in detail below, the soil and/or the groundwater of the area to be decontaminated are preliminary subjected to a characterization in order to design a conceptual multidimensional model by collecting and analysing a series of data related to physical-chemical and/or nutrient parameters.

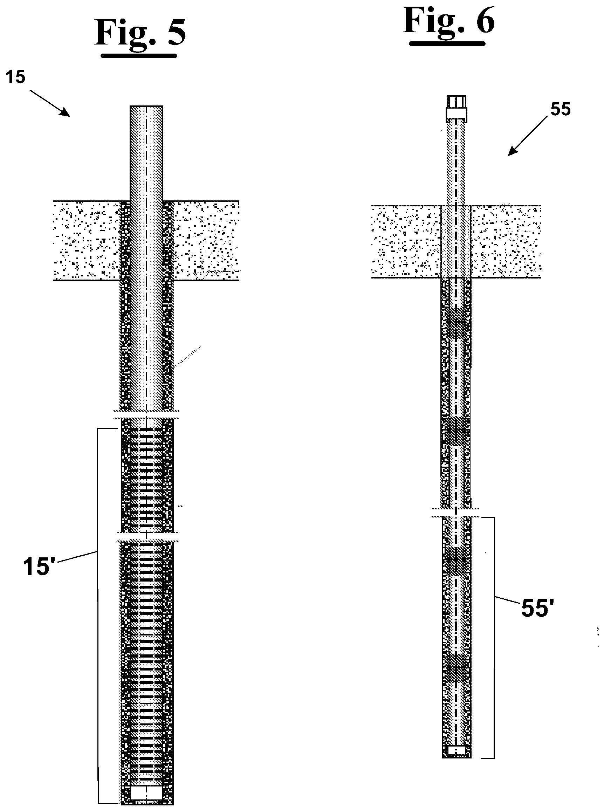

In particular, the plant 1 comprises an extraction section 10 configured to extract a predetermined flow-rate of groundwater of the area to be decontaminated at a predetermined depth, for example at a depth comprised between 6 and 10 m, for example at a depth of about 8 metres. More in particular, the extraction section 10 is configured to produce a predetermined groundwater extraction flow-rate. The extraction section 10 provides at least an extraction well 15, in particular at least a slotted well that means provided, at a passageway portion 15', with a series of slots, or slits (see in particular figure 5). The or each extraction well 15 is connected to at least one pumping device, such as a volumetric pump, connected to the or each extraction well 15 by one or more ducts. In this way, it is possible to extract the groundwater and to generate the aforementioned extraction flow-rate of groundwater. The extraction section 10 is hydraulically connected to a pre-treatment section 20. This can, advantageously, comprise at least a primary sedimentation device 25 configured to separate the floating substances which are present in the groundwater that concentrate, as known, at the superficial zone, from the sludge, which, instead, concentrate at the bottom of the sedimentation device 25.

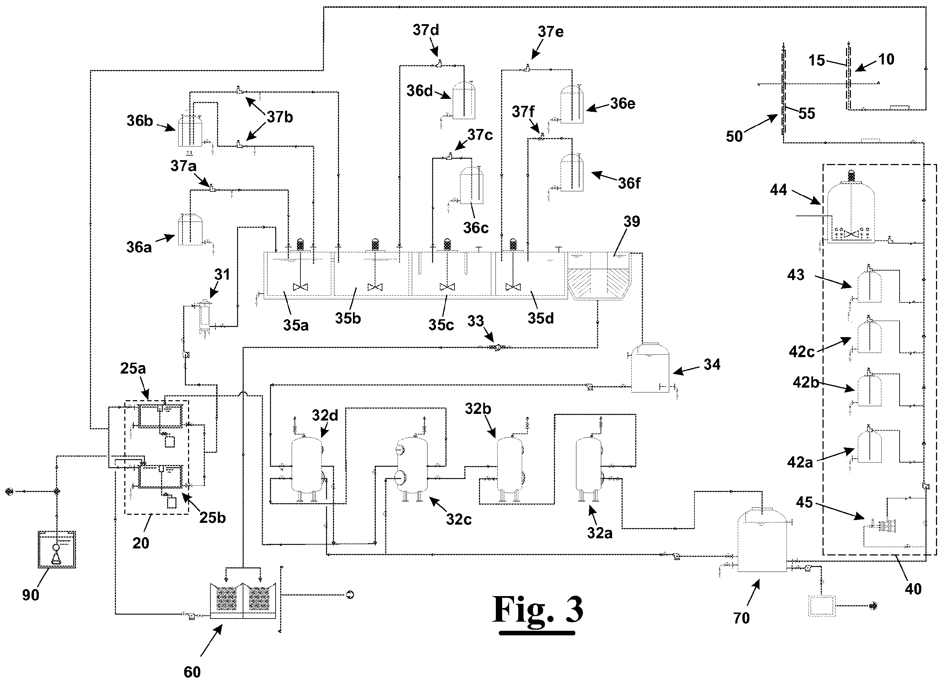

In the alternative embodiment that is diagrammatically shown in figure 3, at the sedimentation section 20 a first and a second primary sedimentation device 25a and 25b are provided connected in parallel to each other.

Once that the primary sedimentation step which has been carried out at the pre-treatment section 20 is completed, from the starting solution of the groundwater a pre-treated aqueous solution is obtained. This is, then, sent, for example by at least a pumping device 26, from the pre-treatment section 20 to a physical-chemical treatment section 30, diagrammatically shown in figure 1 with a block with a broken line.

As diagrammatically shown in figure 1, the physical-chemical treatment section 30 can provide a first filtering device 31, preferably a basket filter, to remove residual quantity of sludge which has not been removed at the pre-treatment section 20. In particular, the physical-chemical treatment section 30 can comprise, advantageously, at least one reaction tank 35 inside of which the pre-treated solution is subjected to at least one reaction, in particular an oxidation reaction, by adding one or more first predetermined chemical reagents in order to cause the precipitation of determined contaminants which are present into the pre-treated aqueous solution.

In the embodiment which is diagrammatically shown in figure 3, a first, a second, a third and a fourth reaction tank 35a-35d are provided connected in series with each other. In an embodiment according to the invention, in the first reaction tank 35a can be fed a solution of 17%, or 18% polyaluminium chloride, or PAC, and a solution of 30% sodium hydroxide (NaOH) to cause a first reaction. In particular, the polyaluminium chloride, or PAC, is used to lower the pH in the first reaction tank 35a, advantageously up to a value comprised between 4.6 and 4.8, i.e. 4.6≤pH≤4.8. In the second reaction tank 35b the aforementioned solution of 30% sodium hydroxide (NaOH) can be fed together with a solution of 30% sodium hydrosulphide in order to cause a second reaction. The solution of 30% NaOH in the second reaction tank 35b is, in particular, used to bring the pH back to basic values in such a way to allow the hydroxides to precipitate.

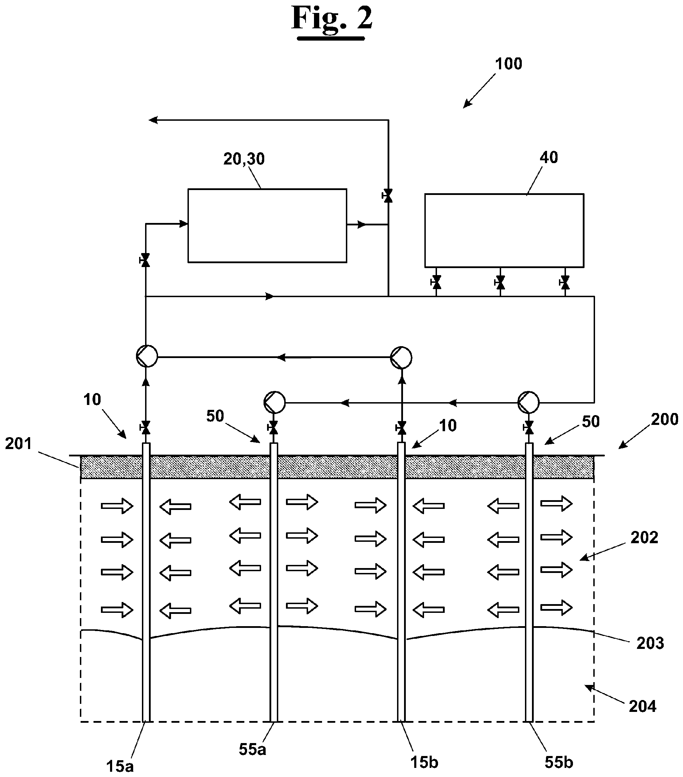

In the third reaction tank 35c a solution containing a polymer, in particular a 0.1% polyelectrolyte, can be fed. Still according to the embodiment of figure 2, in the fourth reaction tank a solution of 15% sodium hypochlorite and a solution of 30%, or 35% hydrogen peroxide can be fed.

In particular, the aforementioned reacting solutions can be contained in the respective storage tanks, in the case of figure 3, six storage tanks 36a-36f, and can be fed into the respective reaction tanks 35a-35d by respective pumping devices 37a-37f. Downstream of the or each reaction tank 35, or 35a-35d, a secondary sedimentation device 39, for example a lamellar settler, is provided. Also in this case, the fraction of floating substances will be concentrated at the surface, whilst the heavier parts at the bottom. From the secondary sedimentation device 39, the sludge produced by the sedimentation process are sent, preferably by a Mohno pump 33, to a dehydration device 60 in such a way to reduce its water content. In this way, the successive treatment and disposal operations provided by the process are greatly simplified and cheaper. The water removed at the dehydration device 60 is sent, by a pumping device 65, to the pre-treatment section 20 in order to subject the same to a further sedimentation process.

The aqueous solution which is present in the secondary sedimentation device 39, in particular a clarified or substantially clarified aqueous solution, which can exit from this by overflowing, or alternatively by drawing the same by a pumping device, is fed, for example by drawing it from a collecting tank 34, inside of which can be collected, into at least a filtering device 32 to be filtered.

As diagrammatically shown in the alternative embodiment of figure 3, a plurality of filtering devices 32, for example four filtering devices 32a-32d arranged in series with each other, can be provided. For example, the four filtering devices 32a-32d can be two groups of filtering devices 32a, 32b and 32c, 32d which can work in parallel or in series. For example, the four filtering devices 32a-32d can comprise in combination or singularly, at least one sand filtering device 32a, preferably quartz sand, at least one pyrolusite filtering device 32b, at least one zeolite filtering device 32c, and at least one activated carbon filtering device 32d. The water removed at the or each filtering device 32a-32d is recirculated upstream of the plant 100 and fed to the or each primary sedimentation device 25 to be there subjected to a further sedimentation process.

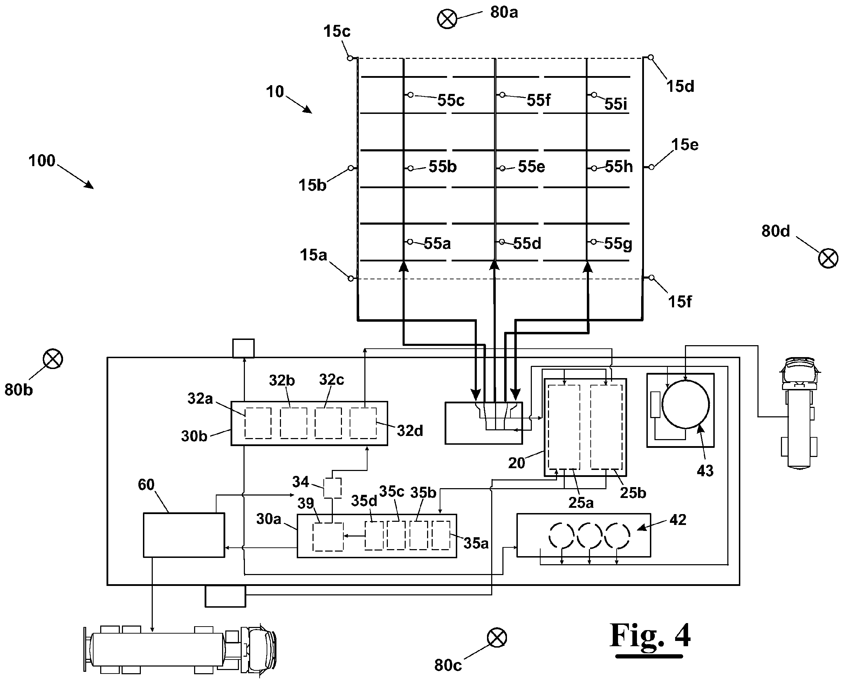

From what is described above and from the plan scheme of the plant 1 of figure 4, the physical-chemical treatment section 30 can be ideally divided into a sub-section of chemical treatment 30a, at which the reaction tanks 35a-35d are provided, and into a sub-section of physical treatment 30b, at which the filters 32a-32d are provided. The filtered aqueous solution exiting the or each filtering device 32a-32d, instead, is, advantageously, sent to a collecting tank 70. From here, the filtered aqueous solution is sent to an enrichment section 40.

More precisely, at the enrichment section 40 the filtered aqueous solution can be subjected to treatments in order to increase the quantity of oxygen which is present in the same and/or the content of determined biological substances obtaining an enriched aqueous solution. More in detail, the enrichment of the aqueous solution 40 can be carried out by adding to the filtered aqueous solution second predetermined chemical reagents selected according to the results obtained in a preliminary characterization step of the soil and/or groundwater to be decontaminated. The preliminary characterization of the soil and/or groundwater is carried out by extracting a predetermined number of samples of the soil and/or groundwater at predetermined depths and analysing such samples, in particular in such a way to identify the organic and inorganic contaminants which are present and, therefore, to design a conceptual multidimensional model of the area to be decontaminated.

In particular, during the characterization step all or a part of the following physical-chemical and/or nutrient parameters can be measured: soil texture, soil structure, apparent density, electrical conductivity, pH, Redox potential, humidity content, mineralogical and geochemical composition, cation exchange capacity, plugging capacity, organic material content, nutrients content, such as organic Carbon and total Carbon, total Nitrogen, Phosphorus and available Potassium, heavy metal or metalloid content, in particular Arsenic, Cadmium, Copper, Chrome, Mercury, Nichel, Lead, and Zinc, content of Polycyclic Aromatic Hydrocarbon (PAH) , Total petroleum hydrocarbons (TPH), or a combination thereof.

More in detail, the determination of the geo-chemical association of the heavy metals to the main phases of the soil (exchangeable, reducible, oxidizable and residual fraction) allows to estimate the leaching potential and, therefore, to direct the composition of the base composition of the leaching solution.

In addition, or alternatively, during the preliminary characterization step a microbiological characterization of the soil and/or groundwater can be carried out. In particular, the microbiological characterization can be obtained by a metagenomic analysis. This, as known, allows to classify the microorganisms of the soil and to determine their potential functions. The presence of particular microorganisms can be detected by extracting and sequencing their DNA, which can be then characterised revealing the nature of the microorganism contained in the same. From the analysis of the DNA sequences, is, in fact, possible to determine the different species which are present in the sample. In this way, it is possible to select the species of microorganisms which is more suitable to the treatment and able to guarantee an effective bioremediation of the soil and/or groundwater. Furthermore, in the enrichment section 40 the feeding of a predetermined flow-rate of oxygen or air can be provided, and its mixing with the filtered aqueous solution in order to increase the content of oxygen of this latter.

For example, as diagrammatically shown in figure 2, the enrichment section 40 can be equipped with a mechanical mixer 45 adapted to mix a predetermined quantity of air, preferably micro-bubbles, or nano-bubbles, of air, or oxygen, in the aqueous solution in order to increase the quantity of oxygen of the same. In particular, the aforementioned predetermined quantity of micro-bubbles and/or nano-bubbles of air or oxygen can be set according to the aforementioned conceptual multidimensional model.

The enrichment section 40 can, furthermore, provide at least one enrichment tank 42 containing a respective enrichment solution. This can be, in particular, a chemical solution or a biological solution. Advantageously, at the enrichment section 40 at least a first tank 42 can be provided containing a chemical solution and at least a second tank 43 containing a determined nutrient solution, or a determined biological solution.

In the embodiment of figure 3, the plant 100, at the enrichment section 40, provides 3 tanks 42a-42c containing respective reagents, in particular determined enrichment solutions. For example, the enrichment solutions can be a solution of hydrogen peroxide, in particular at a concentration of between 25% and 35%, advantageously 30%, a solution of sodium dithionite, in particular at a concentration of between 55% and 65%, advantageously 60%, and a solution of ascorbic acid and ammonium oxalate. In addition, or alternatively, to the aforementioned reagents, a solution of ethylenediaminetetraacetic acid, or EDTA, in particular at a concentration of 1% can be provided.

In the case that from the preliminary characterization of the soil and/or groundwater the presence of heavy metals, in particular Lead, Cadmium, Copper, Chrome, Manganese, Magnesium, Nichel, Zinc, is detected, as reagent can be, advantageously, used a solution of 60% sodium dithionite and of 1% EDTA.

In the case that from the aforementioned preliminary characterization of soil, a significant presence of metalloids is detected, in particular Arsenic, a solution of ascorbic acid and ammonium oxalate can be preferably used.

In particular, it has been verified that if the soil contains a high concentration of organic contaminants using as reagent a solution of 35% hydrogen peroxide and of 1% EDTA, in addition to solubilize the inorganic contaminants, it is possible to act on the organic contaminants thus increasing their biodegradability, in particular by the fragmentation of the molecules, the incorporation of oxygen atoms which leads to the formation of alcohols and carboxylic acids.

The aforementioned second predetermined reagents can be, advantageously, withdrawn from respective tanks 42a-42c and can be sent, for example by respective pumping devices, for example respective volumetric pumps, along a feeding line, in order to generate a flow-rate established based on the textural parameters of soil and the recharge capacity of the aquifer.

For example, the flow-rate of the injected solution can be comprised between 20 l/h and 50 l/h, advantageously comprised between 30 l/h and 40 l/h.

In particular, the addition to the filtered aqueous solution of one or more of the aforementioned second predetermined reagents, allows to obtain, when the enriched aqueous solution so obtained is injected in the subsoil at the extraction section, a leaching of the soil at the unsaturated zone 202.

As known, in fact, see in particular figure 2, starting from the so called "ground level" 201 and going in the depth, it is possible to identify several zones in the soil 200. These are different from each other basically on the water saturation level and on the granulometric and textural characteristics.

In particular, immediately below the ground level 201 a zone called "unsaturated zone" 202 is present. Here empty spaces are present comprised between the soil granules that are not completely full of water, which is able to move towards below by gravity, and towards above by capillarity.

Below the unsaturated zone 202 there is the so-called "capillary fringe" 203 which is a zone of passage between the unsaturated zone and the falda 204. At the capillary fringe 203 the pores are almost completely occupied by the liquid phase, which is kept here by capillarity at a pressure which increases with the depth, but however less than the atmospheric. Its thickness changes considerably with the granulometry of the soil passing from few centimetres in the gravel up to a pair of metres in the clay. Below the capillary fringe 203 the "saturated zone", or "aquifer" 204 is located. This contains the groundwater, whose boundary with the capillary fringe 203 is the piezometric surface, defined as the surface along which the groundwater pressure is equal to the atmospheric pressure. At the aquifer all the pores or slits are saturated with water and this moves mainly along a horizontal direction.

The aforementioned leaching allows to carry out the removal of inorganic contaminants such as Arsenic, Lead, Cadmium, but also Copper, Zinc, Magnesium, Manganese, etc. from the soil.

These inorganic contaminants are, then, removed from the extracted aqueous solution at the extraction section 10 through the different sections which form the plant 100, according to the invention.

Downstream of the aforementioned storage tanks 42a-42c a fourth storage tank 43 can be, furthermore, provided containing a soil amendment solution, preferably a solution containing the macronutrients of soil, in particular Nitrogen, Phosphorus and Potassium.

In particular, the amendments can be UREA, monobasic potassium phosphate, KH₂PO₄, and Potassium bicarbonate, KHCO₃ .

Downstream of the storage tanks 42a-42c, or the fourth tank 43 if present, can be, furthermore, provided a bioreactor 44 containing the aforementioned biological solution. This, for example, can contain at least a species of microorganisms, in particular selected on the basis of the aforementioned preliminary characterization step of the soil and/or groundwater.

In particular, the second chemical reagents and/or the enrichment biological solutions to add to the filtered aqueous solution at the enrichment section 40, are selected according to the conceptual multidimensional model. Analogously, the flow-rate of oxygen which is added to the filtered aqueous solution at the enrichment section 40 is modulated according to the conceptual multidimensional model.

In an embodiment of the invention, the microorganisms can be Fusarium Oxysporum species belonging to Ascomycetes fungi.

More in particular, the selected microorganisms can be extracted and enriched starting from samples of soil of the area to be subjected to the decontamination process according to the invention.

Once that the aqueous solution has been enriched by adding the aforementioned enrichment solutions, an enriched aqueous solution is obtained that is re-injected in the subsoil at a predetermined depth, in particular, as anticipated above, at the unsaturated zone 202, advantageously at a depth between 2 m and 8 m, at an injection section 50. This can comprise, for example, one or more ducts, preferably made of HDPE (High Density Polyethylene) hydraulically connected to at least a pumping device 51.

In particular, the injection in the subsoil of the enriched aqueous solution, as described above, allows to obtain a saturation of the unsaturated zone of the soil and to stimulate a hydraulic circulation both at the saturated zone and at the unsaturated zone of the soil. In this way, it is possible to promote a biostimulation, a bioaugmentation, and a leaching of the inorganic and organic contaminants which are present. In particular, the aforementioned leaching, in particular owing to the presence of the aforementioned second chemical reagents, allows to remove from the soil and/or groundwater, contaminants such as Arsenic, Lead, Cadmium, but also Copper, Chrome, manganese, Zinc, Magnesium, etc. and organic contaminants.

In particular, according to the invention, the injection section 50 can be adapted to inject in the subsoil the aforementioned enriched aqueous solution by adding the or each reagent withdrawn from a respective storage tank 42a-42c in a first injection step, and after this first injection step, to inject water, or an enriched aqueous solution by adding micro-bubbles, or nano-bubbles of air, as described above, in a second injection step following the first one.

The plant 100 as described above and diagrammatically shown in particular in the figures 1 and 3, therefore, carry out a closed cycle which, starting from an aqueous solution to be decontaminated comprising groundwater extracted at the extraction section 10, which acts as the transport fluid of soil to be decontaminated and which in turn is treated to be decontaminated, to be, then, reinjected in the subsoil at the injection section 50 once they have been "enriched" as described above, to promote and help biological processes in the subsoil.

Preferably, the flow-rate of the extracted aqueous solution at the extraction section 10 is greater than the flow-rate of the injected aqueous solution at the injection section 50. In this way the "water table", i.e. the surface where the water pressure head is equal to the atmospheric pressure, is constantly at a pressure lower than the atmospheric one. The volume of clarified water in excess can be in part stored to be used again, or discharged from the plant to the sewerage, or in a body of water.

In particular, the flow-rate of the extracted solution is determined on the basis of the hydraulic conductivity of soil (determined from its texture) and the recharge capacity of the aquifer. For example, the flow-rate of the extracted solution can be less than 10 m³/h, for example comprised between 2 m³/h and 10 m³/h, advantageously comprised between 8 m³/h and 10 m³/h.

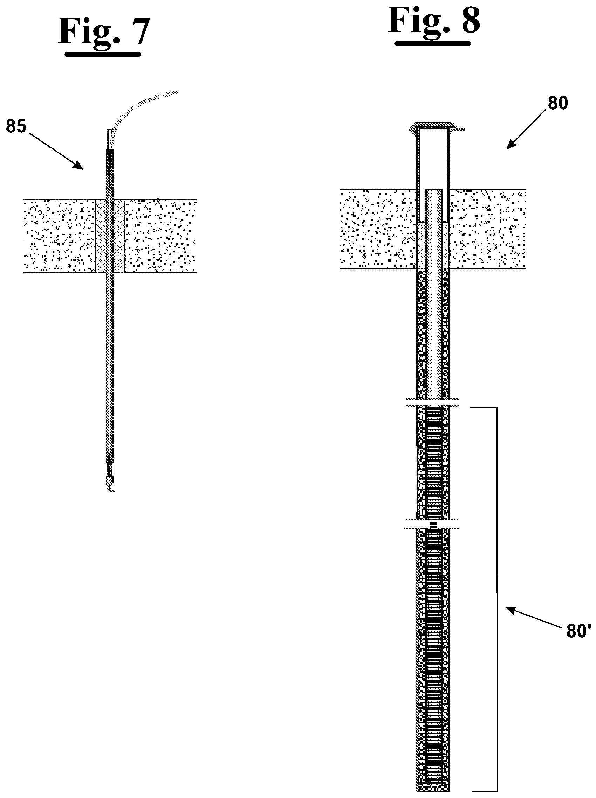

As diagrammatically shown in figure 4, the plant 100 according to the invention, can, furthermore, provide at least a monitoring device 80, for example 4 monitoring devices 80a-80d, configured to monitor the level and the chemical quality of the aquifer outside the area to be decontaminated 110. In particular, as diagrammatically shown in figure 8, the or each monitoring device can be a piezometer 80a-80d, i.e. a monitoring well.

In an embodiment provided by the invention, the plant 100 can, furthermore, provide at least a detection device 85 (see figure 7) adapted to measure some gases that can be produced during the soil treatment.

Advantageously, the plant 100 can, furthermore, comprise at least one storage tank 90 at which the rainwater is collected to be fed, for example by a pumping device, to the pre-treatment section 20.

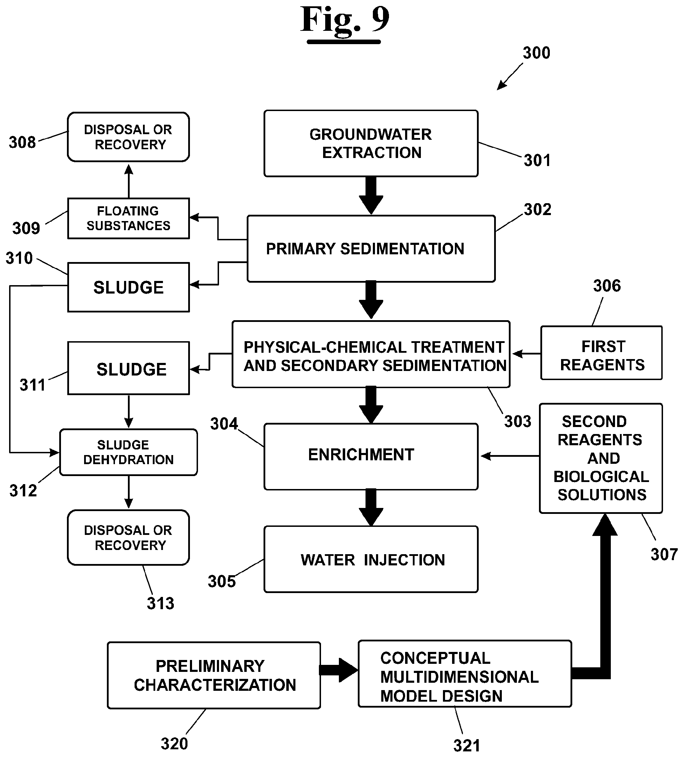

As diagrammatically shown in figure 9, the plant 100 as described above with reference to the figures from 1 to 8, therefore, carries out a process of decontamination of soil and groundwater by a sequence of successive operations. In particular, the process provides an extraction starting step of the groundwater and/or the soil at the area to be decontaminated, block 301. The groundwater is, therefore, subjected to a starting treatment which provides a starting sedimentation, block 302. This is carried out by one or more sedimentation devices 25, where, advantageously, can be used reagents, in particular flocculant and coagulant substances. In this way, the water is separated from the floating substances, block 309 and from the sludge which is present in the treated solution, block 310. This, as anticipated above, is dehydrated, block 312, before being sent to the dump, or used, for example, to produce energy.

After the primary sedimentation step, a step is provided for the physical-chemical treatment of the water so obtained, and a secondary sedimentation for separating the water from the heavy substances which are present, block 303. The physical-chemical treatment provides, in general, to use a series of first chemical reagents to carry out a series of reactions, in particular reactions of oxidation, coagulation, flocculation and filtration, block 306.

The sludge exiting the physical-chemical treatment section is, then, sent, also in this case, to a dehydration section, block 312.

The water obtained at the end of the physical-chemical treatment is, then, subjected to an enrichment step, block 304, before being injected by one or more ducts in the subsoil, block 305. In particular, during the enrichment step second chemical reagents and at least one enrichment biological solution are added, block 307. These are selected according to a conceptual multidimensional model, block 321, which is designed on the basis of a preliminary characterization of the soil and groundwater of the area to be decontaminated, block 320.

### EXPERIMENTAL DATA

In the following, the results obtained on a series of samples coming from a plant, according to the invention, installed in Bilbao for the *in situ* decontamination of soil and/or groundwater, simultaneously, from contaminants of organic and inorganic type are reported.

In particular, 3 different samples were extracted from 9 different surveys. Each sample is representative of a stratigraphic horizon of interest. The 3 stratigraphic horizons are: one superficial, immediately under the concrete pavement, and precisely at an altitude of -0.60 m, the second at an altitude of -2.0 m and the third at an altitude of 3.5 m.

More precisely, the samples have been characterized by measuring for each of them at a distance of 7 months and precisely on August 2022 and on March 2023, the content of Arsenic (As), Cadmium (Cd), Chrome (Cr), Nickel (Ni), Lead (Pb), Copper (Cu), Mercury (Hg), Zinc(Zn), Total petroleum hydrocarbons c10-c40, Dibenzo(a,h)anthracene, Benzo(a)pyrene, Indeno(1,2,3-cd)pyrene, pyrene, Benzo(a)anthracene, Chrysene, Benzo(b)fluoranthene, Benzo(k)fluoranthene and Polycyclic Aromatic Hydrocarbon, or IPA.

The treatment has been carried out, in particular, using as a reagent a solution of 35% hydrogen peroxide and of 1% EDTA. This chosen has been made because the results of the preliminary characterization have verified that the soil had a high concentration of organic contaminants. The aforementioned reagent, in fact, in addition to be able to solubilize the inorganic contaminants, is also able to act on the organic contaminants increasing the biodegradability of the same, in particular by molecules fragmentation, the incorporation of oxygen atoms which leads to the formation of alcohols and carboxylic acids. A flow-rate of the solution of 35% hydrogen peroxide and EDTA injected at about 30 l/h has been used. The treatment with this reagent has been interrupted after 6 days during which cycles of injection and extraction have been repeated, at the end of which 1500 l of solution have been used.

A second reagent has been, furthermore, used and precisely a solution of ammonium oxalate and ascorbic acid. This solution resulted very effective in the removal of Arsenic, in particular Arsenic legato to Iron and Manganese oxides. In this case, a flow-rate of solution of ammonium oxalate and ascorbic acid injected at about 40 l/h has been used. The treatment with this reagent has lasted for 6 days during which 1500 l of solution have been used.

The data which refer to the average decrease of some inorganic contaminants, and precisely: Arsenic, Cadmium, Chrome, Nickel, Lead, Copper and Zinc in a time period of 90 working days are reproduced in the following table (Tab.1).

**Tab. 1**

| **Inorganic contaminant** | **Average decrease** |
|---|---|
| Arsenic | -97% |
| Cadmium | -82% |
| Chrome | -31% |
| Nickel | -56% |
| Lead | -95% |
| Copper | -96% |
| Zinc | -94% |

As can be noted from the data reproduced in table 1, Chrome is the inorganic contaminant with the lowest, even though significant, percentage of decrease and precisely a decrease of 31%, whilst the best results have been obtained for Arsenic, for which an average decrease of 97% has been recorded. An analogous decrease has been also obtained for Lead, Copper and Zinc. The treatment of the organic contamination has been carried out by inoculation of a bacteria consortium selected using instruments of metabarcoding and the predictive metagenomic analysis.

The data which refer to the average decrease of the target organic contaminants and precisely: Total petroleum hydrocarbons c10-c40, Dibenzo(a,h)anthracene, Benzo(a)pyrene, Indeno(1,2,3-cd)pyrene, pyrene, Benzo(a)anthracene, Chrysene, Benzo(b)fluoranthene, Benzo(k)fluoranthene and Polycyclic Aromatic Hydrocarbon, or PAH have been reproduced in the following table 2 (Tab. 2).

**Tab. 2**

| **Organic contaminant** | **Average decrease** |
|---|---|
| Hydrocarbons c10-c40 | -85% |
| Dibenzo(a,h)anthracene | -97% |
| Benzo(a)pyrene | -97% |
| Indeno(1,2,3-cd)pyrene | -97% |
| pyrene | -97% |
| Benzo(a)anthracene | -99% |
| Chrysene | -97% |
| Benzo(b)fluoranthene | -99% |
| Benzo(k)fluoranthene | -96% |
| PAH | -97% |

As can be noted from the data reported in table 2, practically for all the analysed organic contaminants, a very high decrease has been obtained up to reach a decrease even of 99% for the Benzo(a)anthracene. A decrease of about 97% has been obtained for about all the organic contaminants, except for the petroleum hydrocarbons c10-c40, for which a decrease of about 85%, and, therefore, very high, has been, however, obtained.

In light of the above, the process according to the invention results to be highly effective in reducing the main inorganic and organic contaminants.

The foregoing description exemplary embodiments of the invention will so fully reveal the invention according to the conceptual point of view, so that others, by applying current knowledge, will be able to modify and/or adapt for various applications such embodiment without further research and without parting from the invention, and, accordingly, it is therefore to be understood that such adaptations and modifications will have to be considered as equivalent to the specific embodiments. The means and the materials to realize the different functions described herein could have a different nature without, for this reason, departing from the field of the invention. It is to be understood that the phraseology or terminology that is employed herein is for the purpose of description and not of limitation.

## Claims

1. Plant (1) for *in situ* decontamination of soil and/or groundwater in a predetermined area to be decontaminated from organic and inorganic contaminants, wherein said soil and/or said groundwater to be decontaminated are preliminary subjected to a characterization step for designing a conceptual multidimensional model, said plant (1) comprising :
- an extraction section (10) configured to extract a predetermined flow-rate of said groundwater to be decontaminated;
- a pre-treatment section (20) hydraulically connected to said extraction section (10), said pre-treatment section (20) comprising at least one primary sedimentation device (25) configured to separate determined floating substances and sludge from said groundwater obtaining a pre-treated aqueous solution;
- a physical-chemical treatment section (30) hydraulically connected to said pre-treatment section (20) for feeding into said physical-chemical treatment section (30) a predetermined flow-rate of said pre-treated aqueous solution, said physical-chemical treatment section (30) comprising:
- a predetermined number of reaction tanks (35) inside of which said predetermined flow-rate of said pre-treated solution is arranged to be fed to subject said pre-treated aqueous solution to at least a reaction by adding first predetermined chemical reagents adapted to cause the precipitation of determined contaminants which are present in said pre-treated aqueous solution;
- at least one secondary sedimentation device (39) hydraulically connected to at least one reaction tank of said predetermined number of reaction tanks (35) and configured to physically separate said precipitated contaminants from an aqueous solution;
- at least one filtering device (32) hydraulically connected to said secondary sedimentation device (39), said or each filtering device (32) being configured to filter said aqueous solution obtaining a filtered aqueous solution; said plant being
**characterized by**:
- an enrichment section (40) configured to add second predetermined chemical reagents, and at least a predetermined enrichment biological solution to said filtered aqueous solution obtaining an enriched aqueous solution, said second predetermined chemical reagents and said or each enrichment biological solution being selected according to said conceptual multidimensional model;
- an injection section (50) configured to inject, at a predetermined depth, in said soil of said predetermined area to be decontaminated, a predetermined injection flow-rate of said enriched aqueous solution to obtain a saturation of the unsaturated zone of said soil of said predetermined area to be decontaminated and to stimulate a hydraulic circulation both at the saturated zone and at the unsaturated zone of the soil, in such a way to promote a biostimulation, a bioaugmentation and a leaching of said organic and inorganic contaminants.

2. Plant according to claim 1 wherein said enrichment section (40) comprises at least one tank (43) containing a predetermined solution of macronutrients of soil, and at least one bioreactor (44) containing a biological solution comprising at least one predetermined species of microorganisms selected according to the results of said preliminary characterization step of the soil and/or groundwater.

3. Plant according to claim 2, wherein said biological solution contains at least a species of microorganisms selected among: Ascomycetes, bacteria of Proteobacteria species and Actinobacteria species, fungi of Fusarium Oxysporum sp genus or a combination thereof.

4. Plant according to any one of the previous claims, wherein during said characterization step, a plurality of physical-chemical and/or nutrient parameters are measured that are selected among: soil texture, soil structure, apparent density, electrical conductivity, pH, Redox potential, humidity content, mineralogical composition, geochemical composition, cation exchange capacity, plugging capacity, organic material content, nutrients content, heavy metal or metalloid content, content of Polycyclic Aromatic Hydrocarbon (PAH), Total petroleum hydrocarbons (TPH), or a combination thereof.

5. Plant according to any one of the previous claims wherein, said preliminary characterization step comprises a step of microbiological characterization of soil and/or groundwater obtained by a metagenomic analysis.

6. Plant according to any claim from 2 to 5 wherein said or each species of microorganisms is selected during a preliminary step of analysis of the area to be decontaminated and/or of the areas adjacent to said area to be decontaminated.

7. Plant according to any one of the previous claims, wherein said enrichment section (40) is, furthermore, configured to add a predetermined quantity of air or oxygen to said filtered aqueous solution, said predetermined quantity of air or oxygen being set according to said conceptual multidimensional model.

8. Plant according to any one of the previous claims, wherein said enrichment section (40) comprises at least one mechanical mixer (45) configured to mix a predetermined flow-rate of micro-bubbles and/or nano-bubbles of air or oxygen and said filtered aqueous solution, in such a way to increase the quantity of oxygen in said filtered aqueous solution, said predetermined flow-rate of micro-bubbles and/or nano-bubbles of air or oxygen being modulated according to said conceptual multidimensional model and/or at least one storage tank (42a;42d) containing at least one reagent adapted to be added at said enrichment section (40) to a flow of said filtered aqueous solution to be, then, injected at said injection section (50) at said unsaturated zone, and wherein said or each storage tank (42a,42d) contains at least one reagent selected among:
- a solution of 30%, or 35%, hydrogen peroxide;
- a solution of 60% sodium dithionite;
- a solution of ascorbic acid and ammonium oxalate;
- a solution of 1% ethylenediaminetetraacetic acid, or EDTA;
or a combination thereof.

9. Plant according to any one of the previous claims, wherein, if from the preliminary characterization a high concentration of at least one inorganic contaminant selected among: Cadmium, Copper, Chrome, Manganese, Magnesium, Nichel, Lead, Zinc Arsenic, and a high concentration of at least one organic contaminant selected among: Total petroleum hydrocarbons c10-c40, Dibenzo(a,h)anthracene, Benzo(a)pyrene, Indeno (1,2,3-cd)pyrene, pyrene, Benzo(a)anthracene, Chrysene, Benzo(b)fluoranthene, Benzo(k)fluoranthene and Polycyclic Aromatic Hydrocarbon or PAH, are detected, a solution of 35% hydrogen peroxide and of 1% EDTA is used as reagent.

10. Plant (1) according to any one of the previous claims, wherein said extraction section (10) comprises at least one slotted extraction well (15) and wherein said injection section (50) comprises at least one injection duct (55) hydraulically connected ad at least a pumping device to inject said enriched aqueous solution into said or each injection duct (55), wherein said or each pumping device is arranged to inject said enriched aqueous solution by said injection duct (55) at a depth comprises between 2 m and 8 m from the surface.

11. Plant (1) according to any one of the previous claims, wherein said pre-treatment section (20) provides a plurality of primary sedimentation devices (25, 25a, 25b).

12. Plant (1) according to any one of the previous claims, wherein a dehydration section (60) is, furthermore, provided configured to dehydrate the sludge coming from said primary sedimentation device (25) of said pre-treatment section (20) and/or from said secondary sedimentation device (39).

13. Plant (1) according to any one of the previous claims, wherein said reaction tanks (35) comprise at least a reaction tank selected among:
- a tank containing a solution of 30% sodium hydroxide, or NaOH;
- a tank containing aluminium polychloride, or PAC at a concentration of between 15% and 20%;
- a tank containing 30% sodium hydrosulphide;
- a tank containing a polyelectrolyte;
- a tank containing hydrogen peroxide;
- a tank containing sodium hypochlorite;
or a combination thereof.

14. Plant (1) according to any one of the previous claims, wherein said extraction section (10) and said injection section (50) are configured in such a way that said flow-rate of said extracted aqueous solution is greater than said flow-rate of said injected aqueous solution.

15. Process for in situ decontamination of soil and/or groundwater in a predetermined area to be decontaminated from organic and inorganic contaminants, said process comprising the steps of:
- chemical, physical and biological characterization of the soil and/or groundwater to be decontaminated;
- designing of a conceptual multidimensional model of the area to be decontaminated on the basis of said chemical, physical and biological characterization;
- extracting a predetermined flow-rate of said groundwater from said area to be decontaminated;
- pre-treating said groundwater for removing floating substances and sludge obtaining a pre-treated aqueous solution;
- physical-chemical treatment of said pre-treated aqueous solution, said physical-chemical treatment comprising the steps of:
- adding to said pre-treated aqueous solution first predetermined chemical reagents in order to cause the precipitation of determined contaminants which are present in said pre-treated aqueous solution;
- sedimentation of an aqueous solution obtained from said adding step of said first predetermined chemical reagents to said pre-treated solution in order to cause a physical separation of said precipitated contaminants from an aqueous solution;
- filtering said aqueous solution obtaining a filtered aqueous solution;
- enrichment of said filtered aqueous solution by adding second predetermined chemical reagents and at least a predetermined enrichment biological solution to said filtered aqueous solution obtaining an enriched aqueous solution, said second predetermined chemical reagents and said, or each, predetermined enrichment biological solution being selected according to said conceptual multidimensional model;
- injecting at a predetermined depth in said soil of said predetermined area to be decontaminated a predetermined flow of said enriched aqueous solution to obtain a saturation of the unsaturated zone of said soil of said predetermined area to be decontaminated and stimulate a hydraulic circulation both at the saturated zone and at the unsaturated zone of soil, in such a way to promote a biostimulation, a bioaugmentation and a leaching of said organic and inorganic contaminants.

## Patentansprüche

1. Anlage (1) zur *In-situ*-Dekontamination von Boden und/oder Grundwasser in einem vorbestimmten, von organischen und anorganischen Verunreinigungen zu dekontaminierenden Bereich, wobei der Boden und/oder das zu dekontaminierende Grundwasser vorab einem Charakterisierungsschritt zum Erstellen eines konzeptionellen mehrdimensionalen Modells unterzogen werden, wobei die Anlage (1) umfasst:
- einen Extraktionsabschnitt (10), der so konfiguriert ist, dass er eine vorbestimmte Durchflussrate des zu dekontaminierenden Grundwassers extrahiert;
- einen Vorbehandlungsabschnitt (20), der hydraulisch mit dem Extraktionsabschnitt (10) verbunden ist, wobei der Vorbehandlungsabschnitt (20) mindestens eine primäre Sedimentationsvorrichtung (25) umfasst, die so konfiguriert ist, dass sie bestimmte Schwimmstoffe und Schlamm aus dem Grundwasser trennt, wodurch eine vorbehandelte wässrige Lösung erhalten wird;
- einen physikalisch-chemischen Behandlungsabschnitt (30), der hydraulisch mit dem Vorbehandlungsabschnitt (20) verbunden ist, um in den physikalisch-chemischen Behandlungsabschnitt (30) eine vorbestimmte Durchflussrate der vorbehandelten wässrigen Lösung einzuspeisen, wobei der physikalisch-chemische Behandlungsabschnitt (30) umfasst:
- eine vorbestimmte Anzahl von Reaktionstanks (35), in welchen die vorbestimmte Durchflussrate der vorbehandelten Lösung angeordnet ist, um eingespeist zu werden, um die vorbehandelte wässrige Lösung mindestens einer Reaktion zu unterziehen, indem erste vorbestimmte chemische Reagenzien zugegeben werden, die angepasst sind, um die Ausfällung bestimmter Verunreinigungen zu verursachen, die in der vorbehandelten wässrigen Lösung vorhanden sind;
- mindestens eine sekundäre Sedimentationsvorrichtung (39), die hydraulisch mit mindestens einem Reaktionstank der vorbestimmten Anzahl von Reaktionstanks (35) verbunden und so konfiguriert ist, dass sie die ausgefällten Verunreinigungen physisch von einer wässrigen Lösung trennt;
- mindestens eine Filtervorrichtung (32), die hydraulisch mit der sekundären Sedimentationsvorrichtung (39) verbunden ist, wobei die oder jede Filtervorrichtung (32) so konfiguriert ist, dass sie die wässrige Lösung filtriert, wodurch eine filtrierte wässrige Lösung erhalten wird; wobei die Anlage **gekennzeichnet ist durch**:
- einen Anreicherungsabschnitt (40), der so konfiguriert ist, dass er der gefilterten wässrigen Lösung zweite vorbestimmte chemische Reagenzien und mindestens eine vorbestimmte biologische Anreicherungslösung zugibt, wodurch eine angereicherte wässrige Lösung erhalten wird, wobei die zweiten vorbestimmten chemischen Reagenzien und die oder jede biologische Anreicherungslösung gemäß dem konzeptionellen mehrdimensionalen Modell ausgewählt sind;
- einen Injektionsabschnitt (50), der so konfiguriert ist, dass er in einer vorbestimmten Tiefe in den Boden des vorbestimmten zu dekontaminierenden Bereichs eine vorbestimmte Injektionsdurchflussrate der angereicherten wässrigen Lösung injiziert, um eine Sättigung der ungesättigten Zone des Bodens des vorbestimmten zu dekontaminierenden Bereichs zu erreichen und um eine hydraulische Zirkulation sowohl an der gesättigten Zone als auch an der ungesättigten Zone des Bodens auf eine solche Weise anzuregen, dass eine Biostimulation, eine Bioaugmentation und ein Auswaschen der organischen und anorganischen Verunreinigungen gefördert wird.

2. Anlage gemäß Anspruch 1, wobei der Anreicherungsabschnitt (40) mindestens einen Tank (43), der eine vorbestimmte Lösung von Makronährstoffen des Bodens enthält, und mindestens einen Bioreaktor (44) umfasst, der eine biologische Lösung enthält, die mindestens eine vorbestimmte Spezies von Mikroorganismen umfasst, die gemäß den Ergebnissen des vorläufigen Charakterisierungsschritts des Bodens und/oder des Grundwassers ausgewählt ist.

3. Anlage gemäß Anspruch 2, wobei die biologische Lösung mindestens eine Spezies von Mikroorganismen enthält, die ausgewählt ist aus: Ascomyceten, Bakterien der Spezies Proteobacteria und der Spezies Actinobacteria, Pilzen der Gattung Fusarium oxysporum sp. oder einer Kombination davon.

4. Anlage gemäß einem der vorhergehenden Ansprüche, wobei während des Charakterisierungsschritts eine Vielzahl von physikalisch-chemischen und/oder Nährstoffparametern gemessen wird, die ausgewählt sind aus: Bodentextur, Bodenstruktur, Schüttdichte, elektrischer Leitfähigkeit, pH-Wert, Redoxpotential, Feuchtigkeitsgehalt, mineralogischer Zusammensetzung, geochemischer Zusammensetzung, Kationenaustauschkapazität, Verstopfungskapazität, Gehalt an organischem Material, Nährstoffgehalt, Schwermetall- oder Metalloidgehalt, Gehalt an polyzyklischem aromatischem Kohlenwasserstoff (PAK), Gesamt-Erdölkohlenwasserstoffen (TPH) oder einer Kombination davon.

5. Anlage gemäß einem der vorhergehenden Ansprüche, wobei der vorläufige Charakterisierungsschritt einen Schritt der mikrobiologischen Charakterisierung von Boden und/oder Grundwasser umfasst, die durch eine metagenomische Analyse erhalten wird.

6. Anlage gemäß einem der Ansprüche 2 bis 5, wobei die oder jede Spezies von Mikroorganismen während eines vorbereitenden Schritts der Analyse des zu dekontaminierenden Bereichs und/oder der an den zu dekontaminierenden Bereich angrenzenden Bereiche ausgewählt wird.

7. Anlage gemäß einem der vorhergehenden Ansprüche, wobei der Anreicherungsabschnitt (40) ferner so konfiguriert ist, dass er der gefilterten wässrigen Lösung eine vorbestimmte Menge an Luft oder Sauerstoff zusetzt, wobei die vorbestimmte Menge an Luft oder Sauerstoff gemäß dem konzeptionellen mehrdimensionalen Modell eingestellt ist.

8. Anlage gemäß einem der vorhergehenden Ansprüche, wobei der Anreicherungsabschnitt (40) mindestens einen mechanischen Mischer (45) umfasst, der so konfiguriert ist, dass er eine vorbestimmte Durchflussrate von Mikroblasen und/oder Nanoblasen von Luft oder Sauerstoff und der gefilterten wässrigen Lösung derart mischt, dass die Sauerstoffmenge in der gefilterten wässrigen Lösung erhöht wird, wobei die vorbestimmte Durchflussrate von Mikroblasen und/oder Nanoblasen von Luft oder Sauerstoff gemäß dem konzeptionellen mehrdimensionalen Modell moduliert wird, und/oder mindestens einen Speichertank (42a; 42d), der mindestens ein Reagenz enthält, das dazu angepasst ist, an dem Anreicherungsabschnitt (40) einem Strom der gefilterten wässrigen Lösung zugesetzt zu werden, um dann an dem Injektionsabschnitt (50) an der ungesättigten Zone injiziert zu werden, und wobei der oder jeder Speichertank (42a, 42d) mindestens ein Reagenz enthält, ausgewählt aus:
- einer Lösung von 30 % oder 35 % Wasserstoffperoxid;
- einer Lösung von 60 % Natriumdithionit;
- einer Lösung von Ascorbinsäure und Ammoniumoxalat;
- einer Lösung von 1 % Ethylendiamintetraessigsäure oder EDTA;
oder einer Kombination davon.

9. Anlage gemäß einem der vorhergehenden Ansprüche, wobei, wenn aus der vorläufigen Charakterisierung eine hohe Konzentration von mindestens einer anorganischen Verunreinigung, ausgewählt aus: Cadmium, Kupfer, Chrom, Mangan, Magnesium, Nichel, Blei, Zink Arsen, und eine hohe Konzentration von mindestens einer organischen Verunreinigung, ausgewählt aus: Gesamt-Erdölkohlenwasserstoffen C10-C40, Dibenzo(a,h)anthracen, Benzo(a)pyren, Indeno(1,2,3-cd)pyren, Pyren, Benzo(a)anthracen, Chrysen, Benzo(b)fluoranthen, Benzo(k)fluoranthen und polyzyklischem aromatischem Kohlenwasserstoff oder PAK, detektiert wird, eine Lösung von 35 % Wasserstoffperoxid und 1 % EDTA als Reagenz verwendet wird.

10. Anlage (1) gemäß einem der vorhergehenden Ansprüche, wobei der Extraktionsabschnitt (10) mindestens einen geschlitzten Extraktionsschacht (15) umfasst und wobei der Injektionsabschnitt (50) mindestens einen Injektionskanal (55) umfasst, der hydraulisch mit mindestens einer Pumpvorrichtung ad verbunden ist, um die angereicherte wässrige Lösung in den oder jeden Injektionskanal (55) zu injizieren, wobei die oder jede Pumpvorrichtung so angeordnet ist, dass sie die angereicherte wässrige Lösung durch den Injektionskanal (55) in einer Tiefe injiziert, die zwischen 2 m und 8 m von der Oberfläche umfasst.

11. Anlage (1) gemäß einem der vorhergehenden Ansprüche, wobei der Vorbehandlungsabschnitt (20) eine Vielzahl von primären Sedimentationsvorrichtungen (25, 25a, 25b) bereitstellt.

12. Anlage (1) gemäß einem der vorhergehenden Ansprüche, wobei ferner ein Entwässerungsabschnitt (60) vorgesehen ist, der so konfiguriert ist, dass er den aus der primären Sedimentationsvorrichtung (25) des Vorbehandlungsabschnitts (20) und/oder aus der sekundären Sedimentationsvorrichtung (39) stammenden Schlamm entwässert.

13. Anlage (1) gemäß einem der vorhergehenden Ansprüche, wobei die Reaktionstanks (35) mindestens einen Reaktionstank umfassen, ausgewählt aus:
- einem Tank, der eine Lösung von 30 % Natriumhydroxid oder NaOH enthält;
- einem Tank, der Aluminiumpolychlorid oder PAC in einer Konzentration zwischen 15 % und 20 % enthält;
- einem Tank, der 30 % Natriumhydrogensulfid enthält;
- einem Tank, der einen Polyelektrolyten enthält;
- einem Tank, der Wasserstoffperoxid enthält;
- einem Tank, der Natriumhypochlorit enthält;
oder einer Kombination davon.

14. Anlage (1) gemäß einem der vorhergehenden Ansprüche, wobei der Extraktionsabschnitt (10) und der Injektionsabschnitt (50) derart konfiguriert sind, dass die Durchflussrate der extrahierten wässrigen Lösung größer ist als die Durchflussrate der injizierten wässrigen Lösung.

15. Verfahren zur In-situ-Dekontamination von Boden und/oder Grundwasser in einem vorbestimmten, von organischen und anorganischen Verunreinigungen zu dekontaminierenden Bereich, wobei das Verfahren die folgenden Schritte umfasst:
- chemische, physikalische und biologische Charakterisierung des zu dekontaminierenden Bodens und/oder Grundwassers;
- Erstellen eines konzeptionellen mehrdimensionalen Modells des zu dekontaminierenden Bereichs auf der Grundlage der chemischen, physikalischen und biologischen Charakterisierung;
- Extrahieren einer vorbestimmten Durchflussrate des Grundwassers aus dem zu dekontaminierenden Bereich;
- Vorbehandeln des Grundwassers zum Entfernen von Schwimmstoffen und Schlamm, wodurch eine vorbehandelte wässrige Lösung erhalten wird;
- physikalisch-chemische Behandlung der vorbehandelten wässrigen Lösung, wobei die physikalisch-chemische Behandlung die folgenden Schritte umfasst:
- Zugeben von ersten vorbestimmten chemischen Reagenzien zu der vorbehandelten wässrigen Lösung, um die Ausfällung bestimmter Verunreinigungen zu bewirken, die in der vorbehandelten wässrigen Lösung vorhanden sind;
- Sedimentierung einer wässrigen Lösung, die aus dem Schritt des Zugebens der ersten vorbestimmten chemischen Reagenzien zu der vorbehandelten Lösung erhalten wurde, um eine physikalische Trennung der ausgefällten Verunreinigungen aus einer wässrigen Lösung zu bewirken;
- Filtrieren der wässrigen Lösung, wodurch eine filtrierte wässrige Lösung erhalten wird;
- Anreichern der filtrierten wässrigen Lösung durch Zugeben zweiter vorbestimmter chemischer Reagenzien und mindestens einer vorbestimmten biologischen Anreicherungslösung zu der filtrierten wässrigen Lösung, wodurch eine angereicherte wässrige Lösung erhalten wird, wobei die zweiten vorbestimmten chemischen Reagenzien und die oder jede vorbestimmte biologische Anreicherungslösung gemäß dem konzeptionellen mehrdimensionalen Modell ausgewählt werden;
- Injizieren eines vorbestimmten Durchflusses der angereicherten wässrigen Lösung in einer vorbestimmten Tiefe in den Boden des vorbestimmten zu dekontaminierenden Bereichs, um eine Sättigung der ungesättigten Zone des Bodens des vorbestimmten zu dekontaminierenden Bereichs zu erhalten, und
Anregen einer hydraulischen Zirkulation sowohl in der gesättigten Zone als auch in der ungesättigten Zone des Bodens derart, dass eine Biostimulation, eine Bioaugmentation und ein Auswaschen der organischen und anorganischen Verunreinigungen gefördert wird.

## Revendications

1. Installation (1) de décontamination *in situ* du sol et/ou de l'eau souterraine dans une zone prédéterminée à décontaminer à partir de contaminants organiques et inorganiques, dans laquelle ledit sol et/ou ladite eau souterraine à décontaminer sont préalablement soumis à une étape de caractérisation pour la conception d'un modèle conceptuel multidimensionnel, ladite installation (1) comprenant :
- une section d'extraction (10) conçue pour extraire un débit d'écoulement prédéterminé de ladite eau souterraine à décontaminer ;
- une section de prétraitement (20) raccordée hydrauliquement à ladite section d'extraction (10), ladite section de prétraitement (20) comprenant au moins un dispositif de sédimentation primaire (25) conçu pour séparer des substances flottantes déterminées et la boue de ladite eau souterraine en obtenant une solution aqueuse prétraitée ;
- une section de traitement physico-chimique (30) raccordée hydrauliquement à ladite section de prétraitement (20) pour introduire dans ladite section de traitement physico-chimique (30) un débit d'écoulement prédéterminé de ladite solution aqueuse prétraitée, ladite section de traitement physico-chimique (30) comprenant :
- un nombre prédéterminé de réservoirs de réaction (35) à l'intérieur desquels ledit débit d'écoulement prédéterminé de ladite solution prétraitée est agencé pour être introduit afin de soumettre ladite solution aqueuse prétraitée à au moins une réaction en ajoutant des premiers réactifs chimiques prédéterminés adaptés pour provoquer la précipitation de contaminants déterminés qui sont présents dans ladite solution aqueuse prétraitée ;
- au moins un dispositif de sédimentation secondaire (39) raccordé hydrauliquement à au moins un réservoir de réaction dudit nombre prédéterminé de réservoirs de réaction (35) et conçu pour séparer physiquement lesdits contaminants précipités d'une solution aqueuse ;
- au moins un dispositif de filtration (32) raccordé hydrauliquement audit dispositif de sédimentation secondaire (39), ledit ou chaque dispositif de filtration (32) étant conçu pour filtrer ladite solution aqueuse en obtenant une solution aqueuse filtrée ;
ladite installation étant **caractérisée par** :
- une section d'enrichissement (40) conçue pour ajouter des seconds réactifs chimiques prédéterminés, et au moins une solution biologique d'enrichissement prédéterminée à ladite solution aqueuse filtrée pour obtenir une solution aqueuse enrichie, lesdits seconds réactifs chimiques prédéterminés et ladite ou chaque solution biologique d'enrichissement étant sélectionnés selon ledit modèle multidimensionnel conceptuel ;
- une section d'injection (50) configurée pour injecter, à une profondeur prédéterminée, dans ledit sol de ladite zone prédéterminée à décontaminer, un débit d'écoulement d'injection prédéterminé de ladite solution aqueuse enrichie pour obtenir une saturation de la zone insaturée dudit sol de ladite zone prédéterminée à décontaminer et pour stimuler une circulation hydraulique à la fois au niveau de la zone saturée et au niveau de la zone insaturée du sol, de manière à favoriser une biostimulation, une bioaugmentation et une lixiviation desdits contaminants organiques et inorganiques.

2. Installation selon la revendication 1, dans laquelle ladite section d'enrichissement (40) comprend au moins un réservoir (43) contenant une solution prédéterminée de macronutriments du sol, et au moins un bioréacteur (44) contenant une solution biologique comprenant au moins une espèce prédéterminée de micro-organismes sélectionnée en fonction des résultats de ladite étape de caractérisation préliminaire du sol et/ou de l'eau souterraine.

3. Installation selon la revendication 2, dans laquelle ladite solution biologique contient au moins une espèce de micro-organismes choisis parmi : Ascomycètes, bactéries des espèces Proteobacteria et Actinobacteria, champignons du genre Fusarium Oxysporum sp ou une combinaison de ceux-ci.

4. Installation selon l'une quelconque des revendications précédentes, dans laquelle au cours de ladite étape de caractérisation, une pluralité de paramètres physico-chimiques et/ou nutritifs sont mesurés qui sont sélectionnés parmi : la texture du sol, la structure du sol, la densité apparente, la conductivité électrique, le pH, le potentiel redox, la teneur en humidité, la composition minéralogique, la composition géochimique, la capacité d'échange de cations, la capacité de colmatage, la teneur en matière organique, la teneur en nutriments, la teneur en métaux lourds ou en métalloïdes, la teneur en hydrocarbures aromatiques polycycliques (HAP), en hydrocarbures pétroliers totaux (TPH), ou une combinaison de ceux-ci.

5. Installation selon l'une quelconque des revendications précédentes, dans laquelle ladite étape de caractérisation préliminaire comprend une étape de caractérisation microbiologique du sol et/ou de l'eau souterraine obtenue par une analyse métagénomique.

6. Installation selon l'une quelconque des revendications 2 à 5, dans laquelle ladite ou chaque espèce de micro-organismes est sélectionnée au cours d'une étape préliminaire d'analyse de la zone à décontaminer et/ou des zones adjacentes à ladite zone à décontaminer.

7. Installation selon l'une quelconque des revendications précédentes, dans laquelle ladite section d'enrichissement (40) est, en outre, conçue pour ajouter une quantité prédéterminée d'air ou d'oxygène à ladite solution aqueuse filtrée, ladite quantité prédéterminée d'air ou d'oxygène étant définie selon ledit modèle multidimensionnel conceptuel.

8. Installation selon l'une quelconque des revendications précédentes, dans laquelle ladite section d'enrichissement (40) comprend au moins un mélangeur mécanique (45) conçu pour mélanger un débit d'écoulement prédéterminé de micro-bulles et/ou de nanobulles d'air ou d'oxygène et ladite solution aqueuse filtrée, de telle manière à augmenter la quantité d'oxygène dans ladite solution aqueuse filtrée, ledit débit d'écoulement prédéterminé de micro-bulles et/ou de nanobulles d'air ou d'oxygène étant modulé selon ledit modèle multidimensionnel conceptuel et/ou au moins un réservoir de stockage (42a ; 42d) contenant au moins un réactif adapté pour être ajouté au niveau de ladite section d'enrichissement (40) à un flux de ladite solution aqueuse filtrée à injecter ensuite au niveau de ladite section d'injection (50) au niveau de ladite zone insaturée, et dans laquelle ledit ou chaque réservoir de stockage (42a, 42d) contient au moins un réactif sélectionné parmi :
- une solution de 30 % ou 35 % de peroxyde d'hydrogène ;
- une solution de 60 % de dithionite de sodium ;
- une solution d'acide ascorbique et d'oxalate d'ammonium ;
- une solution d'acide éthylènediaminetétraacétique à 1%, ou EDTA ;
ou une combinaison de ceux-ci.

9. Installation selon l'une quelconque des revendications précédentes, dans laquelle, si, à partir de la caractérisation préliminaire, une concentration élevée d'au moins un contaminant inorganique choisi parmi : Cadmium, Cuivre, Chrome, Manganèse, Magnésium, Nichel, Plomb, Zinc Arsenic, et une concentration élevée d'au moins un contaminant organique choisi parmi : Hydrocarbures pétroliers totaux c10 à c40, Dibenzo(a,h)anthracène, Benzo(a)pyrène, Indéno (1,2,3-cd)pyrène, pyrène, Benzo(a)anthracène, Chrysène, Benzo(b)fluoranthène, Benzo(k)fluoranthène et Hydrocarbures aromatiques polycycliques ou HAP sont détectées, une solution de 35 % de peroxyde d'hydrogène et de 1 % d'EDTA est utilisée comme réactif.

10. Installation (1) selon l'une quelconque des revendications précédentes, dans laquelle ladite section d'extraction (10) comprend au moins un puits d'extraction à fentes (15) et dans laquelle la section d'injection (50) comprend au moins un conduit d'injection (55) raccordé hydrauliquement et au moins un dispositif de pompage pour injecter ladite solution aqueuse enrichie dans ledit ou chaque conduit d'injection (55), dans laquelle ledit ou chaque dispositif de pompage est agencé pour injecter ladite solution aqueuse enrichie par ledit conduit d'injection (55) à une profondeur comprise entre 2 m et 8 m de la surface.

11. Installation (1) selon l'une quelconque des revendications précédentes, dans laquelle la section de prétraitement (20) fournit une pluralité de dispositifs de sédimentation primaire (25, 25a, 25b).

12. Installation (1) selon l'une quelconque des revendications précédentes, dans laquelle une section de déshydratation (60) est, en outre, prévue conçue pour déshydrater la boue provenant dudit dispositif de sédimentation primaire (25) de ladite section de prétraitement (20) et/ou dudit dispositif de sédimentation secondaire (39).

13. Installation (1) selon l'une quelconque des revendications précédentes, dans laquelle lesdits réservoirs de réaction (35) comprennent au moins un réservoir de réaction sélectionné parmi :
- un réservoir contenant une solution d'hydroxyde de sodium ou NaOH à 30 % ;
- un réservoir contenant du polychlorure d'aluminium, ou PAC à une concentration comprise entre 15 % et 20 % ;
- un réservoir contenant de l'hydrosulfure de sodium à 30 % ;
- un réservoir contenant un polyélectrolyte ;
- un réservoir contenant du peroxyde d'hydrogène ;
- un réservoir contenant de l'hypochlorite de sodium ;
ou une combinaison de ceux-ci.

14. Installation (1) selon l'une quelconque des revendications précédentes, dans laquelle ladite section d'extraction (10) et ladite section d'injection (50) sont conçues de telle manière que ledit débit d'écoulement de ladite solution aqueuse extraite soit supérieur audit débit d'écoulement de ladite solution aqueuse injectée.

15. Procédé de décontamination in situ du sol et/ou de l'eau souterraine dans une zone prédéterminée à décontaminer à partir de contaminants organiques et inorganiques, ledit procédé comprenant les étapes de :
- caractérisation chimique, physique et biologique du sol et/ou de l'eau souterraine à décontaminer ;
- conception d'un modèle conceptuel multidimensionnel de la zone à décontaminer sur la base de ladite caractérisation chimique, physique et biologique ;
- extraction d'un débit d'écoulement prédéterminé de ladite eau souterraine de ladite zone à décontaminer ;
- prétraitement de ladite eau souterraine pour éliminer les substances flottantes et la boue en obtenant une solution aqueuse prétraitée ;
- traitement physico-chimique de ladite solution aqueuse prétraitée, ledit traitement physico-chimique comprenant les étapes de :
- ajout à ladite solution aqueuse prétraitée de premiers réactifs chimiques prédéterminés afin de provoquer la précipitation de contaminants déterminés qui sont présents dans ladite solution aqueuse prétraitée ;
- sédimentation d'une solution aqueuse obtenue à partir de ladite étape d'ajout desdits premiers réactifs chimiques prédéterminés à ladite solution prétraitée afin de provoquer une séparation physique desdits contaminants précipités d'une solution aqueuse ;
- filtration de ladite solution aqueuse pour obtenir une solution aqueuse filtrée ;
- enrichissement de ladite solution aqueuse filtrée par ajout de seconds réactifs chimiques prédéterminés et d'au moins une solution biologique d'enrichissement prédéterminée à ladite solution aqueuse filtrée pour obtenir une solution aqueuse enrichie, lesdits seconds réactifs chimiques prédéterminés et ladite, ou chaque, solution biologique d'enrichissement prédéterminée étant sélectionnés selon ledit modèle multidimensionnel conceptuel ;
- injection à une profondeur prédéterminée dans ledit sol de ladite zone prédéterminée à décontaminer d'un écoulement prédéterminé de ladite solution aqueuse enrichie pour obtenir une saturation de la zone insaturée dudit sol de ladite zone prédéterminée à décontaminer et
stimuler une circulation hydraulique à la fois au niveau de la zone saturée et au niveau de la zone insaturée du sol, de manière à favoriser une biostimulation, une bioaugmentation et une lixiviation desdits contaminants organiques et inorganiques.
